(19) Europäisches Patentamt
European Patent Office
Office européen des brevets

(11) Veröffentlichungsnummer: **0 212 274**
**B1**

# (12) EUROPÄISCHE PATENTSCHRIFT

(45) Veröffentlichungstag der Patentschrift: **04.01.89**

(21) Anmeldenummer: **86109868.9**

(22) Anmeldetag: **18.07.86**

(51) Int. Cl.⁴: **C 08 L 69/00**, C 08 L 67/02 // (C08L69/00, 67:02, 87:00), (C08L67/02, 69:00, 87:00)

## (54) Thermoplastische Formmassen.

(30) Priorität: **30.07.85 DE 3527156**
**29.10.85 DE 3538389**

(43) Veröffentlichungstag der Anmeldung: **04.03.87 Patentblatt 87/10**

(45) Bekanntmachung des Hinweises auf die Patenterteilung: **04.01.89 Patentblatt 89/1**

(84) Benannte Vertragsstaaten: **DE FR GB IT NL**

(56) Entgegenhaltungen:
**EP-A-0 107 048**
**EP-A-0 107 303**
**US-A-3 875 256**

(73) Patentinhaber: **BAYER AG, Konzernverwaltung RP Patentabteilung, D-5090 Leverkusen 1 Bayerwerk (DE)**

(72) Erfinder: **Freitag, Dieter, Dr., Hasenheide 10, D-4150 Krefeld 1 (DE)**
Erfinder: **Nouvertné, Werner, Dr., Scheiblerstrasse 95, D-4150 Krefeld 1 (DE)**
Erfinder: **Tacke, Peter, Dr., Brandenburger Strasse 12, D-4150 Krefeld 1 (DE)**
Erfinder: **Wilms, Klaus Günther, Dr., Pommernallee 18, D-4047 Dormagen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1989

**Beschreibung**

Gegenstand der vorliegenden Erfindung sind thermoplastische Formmassen enthaltend

(A) 98 bis 1 Gew,-%, vorzugsweise 78 bis 20 Gew.-%, und insbesondere 64 bis 30 Gew.-%, thermoplastische, aromatische Polycarbonate mit Gewichtsmittelmolekulargewichten $M_w$ zwischen 10 000 und 200 000 ($M_w$ ermittelt durch Lichtstreuung),
(B) 1 bis 98 Gew.-%, vorzugsweise 20 bis 78 Gew.-% und insbesondere 30 bis 64 Gew.-%, thermoplastische Polyalkylenterephthalate und gegebenenfalls
(C) 0 bis 30, vorzugsweise 1 bis 20, insbesondere 3 bis 12 Gew.-%, eines kautschukelastischen Polymerisats mit einer Glasübergangstemperatur von unter -20° C, die dadurch gekennzeichnet sind, daß sie
(D) 1 bis 30 Gew.-%, vorzugsweise 1 bis 20 Gew.-% und insbesondere 3 bis 15 Gew.-%, eines Polycarbonat-Polyphenylenoxid-Blockcokondensats enthalten, wobei die Summe der Gewichtsprozente der Komponenten (A) + (B) + (C) + (D) jeweils 100 Gew.-% beträgt.

Die Komponenten (A) bis (D)

**Die Komponente (A)**

Unter aromatischen Polycarbonaten (A) im Sinne dieser Erfindung werden die bekannten Homopolycarbonate, Copolycarbonate und Mischungen dieser Polycarbonate verstanden, denen z. B. mindestens eines der folgenden Diphenole zugrundeliegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole

sowie deren kernalkylierte und kernhalogenierte Derivate. Diese und weitere geeignete Diphenole sind z. B. in den US-PS-3 028 364, 3 275 601, 3 148 172, 3 062 781, 2 991 273 und 2 999 846 beschrieben.

Bevorzugte Diphenole sind z. B.

4,4'-Dihydroxydiphenyl,
2,4-Bis-(4-hydroxyphenyl)-2-methylbutan,
α,α'-Bis-(-4-hydroxyphenyl)-p-diisopropylbenzol,
2,2-Bis-(3-methyl-4-hydroxyphenyl)-propan und
2,2-Bis-(3-chlor-4-hydroxyphenyl)-propan.

Besonders bevorzugte Diphenole sind z. B.

2,2-Bis-(4-hydroxyphenyl)-propan,
2,2-Bis-(-3,5-dichlor-4-hydroxyphenyl)-propan,
2,2,Bis-(-3,5-dibrom-4-hydroxyphenyl)propan und
1,1-Bis-(-4-hydroxyphenyl)-cyclohexan.

Die aromatischen Polycarbonate (A) können durch den Einbau geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxygruppen, verzweigt sein.

Die aromatischen Polycarbonate (A) sollen in der Regel mittlere Molekulargewicht $M_w$ (Gewichtsmittel) von 10 000 bis 200 000, vorzugsweise von 20 000 bis 80 000 haben, ermittelt durch Messungen der relativen Viskosität in Dichlormethan bei 25° C und einer Konzentration von 0,5 g in 100 ml Lösung oder ermittelt durch Lichtstreuung.

Den hochmolekularen Polycarbonaten mit $M_w$ von 10 000 bis 200 000 können auch kleine Anteile niedermolekularer Polycarbonate, z. B. mit einem mittleren Polykondensationsgrad von 2 bis 20, zugemischt sein.

Zur Einstellung des Molekulargewichts $M_w$ der Polycarbonate (A) werden in bekannter Weise Kettenabbrecher, wie beispielsweise Phenol, Halogenphenole oder Alkylphenole, Carbonsäurechloride,

Phenylchlorkohlensäureester in den berechneten Mengen eingesetzt. Bevorzugte Kettenabbrecher sind in der DE-OS-2 842 005 beschrieben.

Die Herstellung der erfindungsgemäß einzusetzenden Polycarbonate (A) erfolgt in bekannter Weise entweder nach dem Phasengrenzflächenverfahren oder nach dem Verfahren in homogener Lösung (Pyridinverfahren) oder gegebenenfalls nach dem Schmelzumesterungsverfahren.

**Die Komponente (B)**

Polyalkylenterephthalate (B) im Sinne der Erfindung sind Reaktionsprodukte aus aromatischen Dicarbonsäuren oder ihren reaktionsfähigen Derivaten (z. B. Dimethylestern oder Anhydriden) und aliphatischen, cycloaliphatischen oder araliphatischen Diolen und Mischungen dieser Reaktionsprodukte.

Bevorzugte Polyalkylenterephthalate (B) lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate (B) enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate (B) können neben Terephthalsäureestern bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie z. B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate (B) können neben Ethylenglykol bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylenpropandiol-1,3, Neopentylglykol, Pentan-diol-1,5, Hexandiol-1,6, Cyclohexan-dimethanol-1,4, 4-Methylpentandiol-2,4, 2-Methylpentandiol-2,4, 2,2,4-Trimethylpentandiol-1,3 und -1,5, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(-3-β-hydroxy-ethoxyphenyl)-propan und 2,2-Bis-(-4-hydroxypropoxyphenyl)-propan (DE-OS-2 407 674, 2 407 776, 2 715 932).

Die Polyalkylenterephthalate (B) können durch Einbau relativ kleiner Mengen 3- oder 4-wertiger Alkohole oder 3-oder 4-basischer Carbonsäuren, wie sie z. B. in der DE-OS-1 900 270 und der US-PS-3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-%, des Verzweigungsmittels, bezogen auf die Säurekomponente, zu verwenden.

Besonders bevorzugt sind Polyalkylenterephthalate (B), die allein aus Terephthalsäure und deren reaktionsfähigen Derivaten (z. B. deren Dialkylestern) und Ethylenglykol und/oder Butandiol-1,4 hergestellt worden sind, und Mischungen dieser Polyalkylenterephthalate.

Bevorzugte Polyalkylenterephthalate (B) sind auch Copolyester, die aus mindestens zwei der obengenannten Säurekomponenten und/oder aus mindestens zwei der obengenannten Alkoholkomponenten hergestellt sind; besonders bevorzugte Copolyester sind Poly-(ethylenglykol/butandiol-1,4)-terephalate.

Die als Komponente (B) vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1 : 1 Gew.-Teile) bei 25°C.

**Die Komponente C**

Die Polymerisate (C) mit einer Glasübergangstemperatur von unter -20°C umfassen Copolymerisate - insbesondere Pfropfcopolymerisate - mit kautschukelastischen Eigenschaften, die im wesentlichen aus mindestens 2 der folgenden Monomeren erhältlich sind: Chloropren, Butadien, Isopren, Isobuten, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B in "Methoden der Organischen Chemie", (Houben-Weyl), Bd. 14/1, Georg Thieme Verlag, Stuttgart 1961, S. 393 - 406 und in C.B. Bucknall, "Toughened Plastics", Appl. Science Publishers, London 1977, beschrieben sind. Bevorzugte Polymerisate (C) besitzen einen Gelgehalt von über 20, vorzugsweise über 40 Gew.-%.

Bevorzugte Polymerisate (C) sind Ethylen/Vinylacetat-Copolymerisate mit 15 bis 45 Gew.-% Vinylacetatresten und Schmelzindices von nicht fließfähig bis 1000, vorzugsweise von 0,1 bis 20, gemessen bei 190°C und 2,16 kp Belastung nach DIN 53 735.

Ebenfalls bevorzugte Polymerisate (C) sind Ethylen/Propylencopolymerisate und Ethylen/Propylen/Dien-Terpolymerisate (EPM- und EPDM-Kautschuke), in denen das Gew.-Verhältnis von Ethylen- zu Propylenresten im Bereich von 40 : 60 bis 90 : 10, vorzugsweise 40 : 60 bis 65 : 35, liegt.

Die Mooney-Viskositäten ($ML_{1+4}/100°C$) der unvernetzten EPM- und EPDM-Kautschuke liegen zwischen 25 bis 100, vorzugsweise zwischen 35 bis 90. Die Gelgehalte der unvernetzten EPM- und EPDM-Kautschuke liegen unter 1 Gew.-%.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1000 C-Atome aufweisen können. Als geeignete Dien-monomere im EPDM seien beispielsweise genannt: konjugierte Diene, z. B. Isopren und Butadien, und nicht-konjugierte Diene mit 5 bis 25 C-Atomen, z. B. 1,4-Pentadien, 1,4-Hexadien, 1,5-Hexadien, 2,5-Dimethyl-1,5-hexadien und 1,4-Octadien; cyclische Diene, z. B. Cyclopentadien, Cyclohexadien, Cyclooctadien und Dicyclopentadien; Alkenylnorbornene, z. B. 5-Ethyliden-2-norbornen, 5-Butyliden-2-norbornen, 2-Methallyl-5-norbornen, 2-Isopropenyl-5-norbornen und Tricyclodiene, z. B. 3-Methyl-tricyclo-(5,2,1,0,2,6)-3,8-decadien. Bevorzugt seien die nicht-konjugierten Diene Hexadien-1,5, Ethylidennorbornen oder Dicyclopentadien angeführt. Der Diengehalt im EPDM beträgt vorzuzgsweise 0,5 bis 10 Gew.-%. EPM- und EPDM-Kautschuke sind z. B. in der DE-OS-2 808 709 beschrieben.

Weitere bevorzugte Polymerisate (C) sind selektiv hydrierte Blockcopolymerisate eines vinylaromatischen Monomeren (X) und eines konjugierten Diens (Y) aus einem Block polymerisierter Vinylaromaten und einem Block des polymerisierten Diens, d. h. des X-Y-Typs. Diese Blockcopolymeristate und ihre Herstellung sind bekannt.

Im allgemeinen kann für die Herstellung geeigneter X-Y-Blockcopolymerisate aus Styrol, α-Methylstyrol, Vinyltoluol oder Gemischen und aus konjugierten Dienen, wie Butadien, Isopren, die in "Encyclopedia of Polymer Science and Technology", Bd. 15, Interscience, N. Y. (1971) auf den Seiten 508 ff. beschriebene Arbeitsweise benutzt werden. Die selektive Hydrierung solcher Produkte ist ebenfalls bekannt; es werden dabei die ethylenischen Doppelbindungen im wesentlichen vollständig hydriert, die aromatischen Doppelbindungen bleiben im wesentlichen erhalten. Solche selektiv hydrierte Blockcopolymerisate werden z. B. in der DE-OS-3 000 282 beschrieben.

Bevorzugte Polymerisate (C) sind weiterhin z. B. mit Styrol und/oder Acrylnitril und/oder (Meth)-Acrylsäurealkylestern gepfropfte Polybutadiene, Butadien/Styrol-Copolymerisate und Poly(meth)acrylsäureester, z. B. Copolymerisate aus Styrol oder Alkylstyrol und konjugierten Dienen (schlagfestes Polystyrol), d. h. Copolymerisate der in der DE-OS-1 694 173 (= US-PS-3 564 077) beschriebenen Art, mit Acryl- oder Methacrylsäureestern, Vinylacetat, Acrylnitril, Styrol und/oder Butadien/Acrylnitril-Copolymerisate, Polyisobutene oder Polyisoprene, wie sie z. B. in der DE-OS-2 348 377 (= US-PS-3 919 353) beschrieben sind.

Besonders bevorzugte Polymerisate (C) sind ABS-Polymerisate (sowohl Misch- als auch Pfropftypen), wie sie z. B. in der DE-OS-2 035 390 (= US-PS-3 644 574) oder in der DE-OS-2 248 242 (= GB-PS-1 409 275) beschrieben sind.

Besonders bevorzugte Polymerisate (C) sind auch Pfropfpolymerisate, die durch Pfropfreaktion von

I. 10 bis 40, vorzugsweise 10 bis 35, insbesondere 15 bis 25 Gew.-%, bezogen auf Pfropfprodukt, mindestens eines (Meth-)Acrylsäureesters und/oder eines Gemisches aus
10 bis 35, vorzugsweise 20 bis 35 Gew.-%, bezogen auf Gemisch, Acrylnitril und
65 bis 90, vorzugsweise 65 bis 80 Gew-%, bezogen auf Gemisch, Styrol auf

II. 60 bis 90, vorzugsweise 65 bis 90, insbesondere 75 bis 85 Gew.-%, bezogen auf Pfropfprodukt, eines Butadien-Polymerisats mit mindestens 70 Gew-%, bezogen auf II, Butadienresten als Pfropfgrundlage erhältlich sind,

wobei vorzugsweise der Gelanteil der Pfropfgrundlage II $\geqslant$ 70 % (in Toluol gemessen), der Pfropfgrad G 0,15 bis 0,55 und der mittlere Teilchendurchmesser $d_{50}$ des Pfropfpolymerisats (C) 0,2 bis 0,6, vorzugsweise 0,3 bis 0,5 σm betragen.

(Meth-)Acrylsäureester I sind insbesondere Ester der Acrylsäure und der Methacrylsäure mit einwertigen Alkoholen mit 1 bis 8 C-Atomen.

Die Pfropfgrundlage II kann neben Butadienresten bis zu 30 Gew.-%, bezogen auf II, Reste anderer ethylenisch ungesättigter Monomerer, z. B. Styrol, Acrylnitril, Ester der Acryl- oder Methacrylsäure mit 1-4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Bei der Pfropfpolymerisation werden die Pfropfmonomeren I bekanntlich nicht vollständig auf die Pfropfgrundlage II aufgepfropft. Erfindungsgemäß werden als Pfropfpolymerisate die Produkte der Pfropfpolymerisation, d. h. auch solche Produkte verstanden, die neben den eigentlichen Pfropfpolymerisaten auch Homo- und Copolymerisate der eingesetzten Pfropfmonomeren I enthalten.

Der Pfropfgrad G bezeichnet das Gew.-Verhältnis von aufgepropften Pfropfmonomeren zu Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid. Z. und Z. Polymere 250 (1972), 782 - 796) oder mittels Elektronenmikroskopie und anschließende Teilchenauszählung (G. Kämpf, H. Schuster, Angew. Makromoloekulare Chemie 14, (1970), 111 - 129) oder mittels Lichtstreuungsmessungen.

Besonders bevorzugte Polymerisate (C) sind z. B. auch Pfropfpolymerisate aus

a) 25 bis 98 Gew.-%, bezogen auf (C), Acrylatkautschuk mit einer Glasübergangstemperatur unter -20° C als Pfropfgrundlage und
b) 2 bis 75 Gew.-%, bezogen auf (C), mindestens eines polymerisierbaren ethylenisch ungesättigten Monomeren, dessen bzw. deren in Abwesenheit von (a) entstandenen Homo- bzw. Copolymerisate eine Glasübergangstemperatur über 25° C hätten, als Pfropfmonomere.

Die Acrylatkautschuke (a) der Polymerisate (C) sind vorzugsweise Polymerisate aus Acrylsäurealkylestern, gegegebenenfalls mit bis zu 40 Gew.-% anderer polymerisierbarer ethylenisch ungesättigter Monomerer. Sofern die als Pfropfgrundlage (a) eingesetzten Acrylatkautschuke - wie auf Seite 18 beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl-, Ethyl-, Butyl-, Octyl- und 2-Ethylhexylester, Halogenalkylester, vorzugsweise Halogen-$C_1$-$C_8$-alkylester, wie Chlorethylacrylat, und aromatische Ester wie Benzylacrylat und Phenethylacrylat. Sie können einzeln oder in Mischung eingesetzt werden.

Die Acrylatkautschuke (a) können unvernetzt oder vernetzt sein, vorzugsweise sind sie partiell vernetzt.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z. B. Ethylenglykoldimethylacrylat, Allylmethacrylat; mehrfach ungesättigte heterocyclische Verbindungen, wie z. B. Trivinyl- und Triallylcyanurat und -isocyanurat, Trisacryloyl-s-triazine, insbesondere Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat. Triacryloylhexahydro-s-triazin, Triallylbenzole.

Die Mengen der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf < 1 Gew.-%, der Pfropfgrundlage (a) zu beschränken.

Bevorzugt "andere" polymerisierbare ethylenisch ungesättigte Monomere, die neben den Acrylsäureestern gegebenenfalls zur Herstellung der Pfropfgrundlage (a) dienen können, sind z. B. Acrylnitril, Styrol, α-Methylstyrol, Acrylamide, Vinyl-$C_1$-$C_6$-alkylether. Bevorzugte Acrylatkautschuke als Pfropfgrundlage (a) sind Emulsionspolymerisate, die einen Gelgehalt von & 60 Gew.-% aufweisen.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme Verlag, Stuttgart 1977).

Acrylkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungessätigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Besonders bevorzugte Pfropfgrundlagen (a) für Pfropfpolymerisate (C) auf Basis von Polyacrylsäureestern seien nachfolgend zusammengefaßt:

1. Acrylsäureesterpolymerisate und -copolymerisate ohne Dienkautschukkern und
2. Acrylsäureesterpolymerisate und -copolymerisate, die einen Dienkautschukkern enthalten.

Die Pfropfausbeute, d. h. der Quotient aus der Menge des aufgepfropften Monomeren (b) und der Menge des eingesetzten Pfropfmonomeren (b), beträgt in der Regel 20 bis 80 Gew.-%. Die Bestimmung kann wie bei M. Hoffmann, H. Krömer, R. Kuhn, Polymeranalytik, Bd. 1, Georg Thieme Verlag, Stuttgart 1977, beschrieben, erfolgen.

Bevorzugte Pfropfmonomere (b) sind α-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gew.-Verhältnis 90 : 10 bis 50 : 50.

Solche Pfropfpolymerisate (C) auf Basis von Polyacrylsäureestern werden z. B. in der DE-AS-2 444 584 (= US-PS-4 022 748) und in der DE-OS-2 726 256 (= US-PS-4 096 202) beschrieben.

Besonders vorteilhafte Pfropfpolymerisate dieser Art erhält man, wenn man 2 bis 20, vorzugsweise 2 bis 15 Gew.-%, bezogen auf (C), Monomer (b) auf 80 bis 98, vorzugsweise 85 bis 97, Gew.-%, bezogen auf (C), des vollständig gebrochenen und in Wasser aufgeschlämmten Latex von (a) in Abwesenheit von Suspendiermittel aufgepfropft. Das anfallende pulverförmige Pfropfpolymerisat kann anschließend getrocknet und im gewünschten Verhältnis unter Einwirkung von Scherkräften mit den anderen Komponenten so homogenisiert werden, daß die mittlere Teilchengröße $d_{50}$ von (C) in der erfindungsgemäßen Mischung 0,05 bis 3 µm, vorzugsweise 0,1 bis 2, insbesondere 0,2 bis 1 µm beträgt.

Der Begriff "in Abwesenheit von Suspendiermittel" bedeutet die Abwesenheit von Stoffen, die nach Art und Menge die Pfropfmonomeren (b) in der wäßrigen Phase suspendieren können. Die Definition schließt die Anwesenheit von Stoffen nicht aus, die z. B. bei der Herstellung einer gepfropften Pfropfgrundlage (a) suspendierend gewirkt haben; in derartigen Fällen muß das Koagulations- oder Fällungsmittel, das zum Brechen des Latex (a) eingesetzt wird, in einer Menge zugesetzt werden, die die suspendierende Wirkung der in der Vorstufe eingesetzten Stoffe kompensiert; mit anderen Worten: Es muß darauf geachtet werden, daß die Pfropfmonomeren (b) in der wäßrigen Phase keine (stabile) Emulsion ergeben.

Ein derart in Abwesenheit von Suspendiermittel hergestelltes Pfropfpolymerisat (C) ist als Bestandteil der erfindungsgemäßen Formmassen in den anderen Harzkomponenten zu einer außergewöhnlich niedrigen Teilchengröße verteilbar, die relativ unverändert auch längere Verarbeitungszeit bei höherer Temperatur übersteht.

Der Begriff "außergewöhnlich niedrige Teilchengröße" meint, daß Anzahl, Form und Größe der einzusetzenden Pfropfpolymerisatteilichen mit Anzahl, Form und Größe der in die geschmolzenen anderen Harzkomponenten eingebrachten Pfropfpolymerisatteilichen auch nach dem Homogenisieren im wesentlichen noch übereinstimmen.

Als Pfropfgrundlage (a) können auch solche Acrylatkautschuke verwendet werden, die als wäßrige Emulsion (Latex) anfallen und deren Latexpartikel 1 bis 20 Gew.-%, vorzugsweise 1 bis 10 Gew.-%, bezogen auf (a), bereits in wäßriger Emulsion aufgepfropfte Monomere enthalten, deren Homo- bzw Copolymerisate Glastemperaturen $> 0°C$ aufweisen würden.

Bevorzugte derartige aufgepfropfte Monomere sind Alkylacrylate, Alkylmethacrylate, Styrol, Acrylnitril, α-Methylstyrol und/oder Vinylacetat.

Derartige Pfropfgrundlagen (a) werden z. B. durch Emulsionspolymerisation oder Emulsionspropfpolymerisation hergestellt. Man kann sie aber auch so herstellen, daß man einen Acrylatkautschuk in Lösung oder Masse herstellt, dann die Pfropfmonomeren aufpfropft und anschließend diese Kautschuke in eine wäßrige Emulsion, die sich für weitere Pfropfverfahren eignet, überführt.

Als Pfropfgrundlagen (a) für Acrylatkautschuke dieser besonderen Ausführungsform eignen sich also vorzugsweise neben den auf Seite 12 aufgezählten Polymerisaten auch in wäßriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten polymerisierbaren Monomeren.

**Die Komponente (D)**

Polycarbonat-Polyphenylenoxid-Blockkondensate im Sinne der vorliegenden Erfindung sind Polymere, die 5 Gew.-%. bis 95 Gew.-%, bezogen auf das Gesamtgewicht an bifunktionellen Struktureinheiten des Blockkondensats, Struktureinheiten der Formel (I),

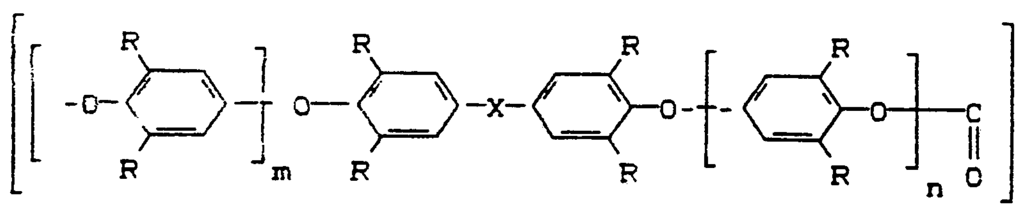

(I)

worin R gleich oder verschieden ist und für Wasserstoff oder einen Alkylrest mit 1 bis 4 C-Atomen steht, X für

FIG00/15

eine Gruppe R-C-R, -O-, -S- oder $-SO_2-$ und "m" und "n"

FIG00/15

für eine ganze Zahl von 1 bis 200 stehen, und

95 Gew.-% bis 5 Gew.-%, bezogen auf das Gesamtgewicht an bifunktionellen Struktureinheiten des Blockkondensats, andere Struktureinheiten der Formel (II) enthalten

$$\left[\ -O-Z-O-\underset{O}{\underset{\|}{C}}-\ \right] \qquad (II),$$

worin -O-Z-O- ein Diphenolatrest ist, welcher 6 bis 30 C-Atome hat.
Bevorzugte Diphenolatreste -O-Z-O- sind solche der Formel (III)

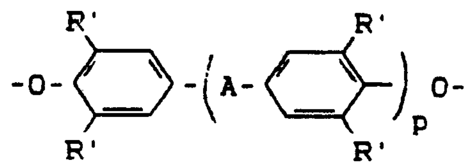
(III),

worin
A eine Einfachbindung, $C_1$-$C_6$-Alkylen, $C_2$-$C_6$-Alkyliden, $C_5$-$C_6$-Cycloalkyliden, $-\underset{O}{\underset{\|}{C}}-$, $-SO_2$ oder ein Rest der

Formel (a)

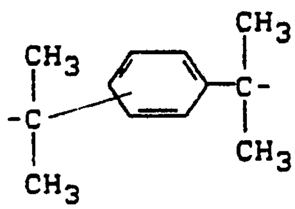
(a)

ist, und worin R' gleich oder verschieden und H, $CH_3$ Cl oder Br ist und p Null oder 1 ist.

Diese Blockkondensate sowie ihre Herstellung sind in der deutschen Patentanmeldung P-34 45 440.3 (Le A 23 440) beziehungsweise P 35 25 337.1 (Le A 23 104) beschrieben. Die Herstellung erfolgt nach dem bekannten Phasengrenzflächenverfahren zur Herstellung von aromatischen, thermoplastischen Polycarbonaten aus bekannten (siehe DE-OS-3 308 421) Polyphenylenoxiden der Formel (Ia)

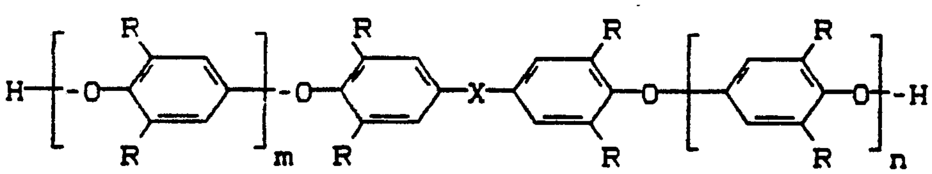
(Ia),

worin R, X, m und n die für Formel (I) genannte Bedeutung haben, mit anderen Diphenolen

HO - Z - OH (IIa)

Kettenabbrechern, Phosgen und gegebenenfalls Verzweigern.

Die organische Phase des Phasengrenzflächenverfahrens besteht beispielsweise in bekannter Weise aus $CH_2Cl_2$, Chlorbenzol oder deren Gemischen.

Die alkalische wäßrige Phase hat im allgemeinen einen pH-Wert von 8 bis 14, vorzugsweise von 9 bis 13.

Das Volumenverhältnis von organischer zu anorganischer Phase beträgt im allgemeinen 1 : 6 bis 1 : 1.

Die Menge an organischer Phase ist im allgemeinen so bemessen, daß das resultierende Block-Polyether-Polycarbonat als 0,5 bis 20 gewichtsprozentige Lösung anfällt.

Die Molmenge an Phosgen beträgt bis zu 150 Mol-%, bezogen auf die Mol-Summe der eingesetzten Diphenolkomponenten.

Als Katalysatoren für das Herstellungsverfahren sind tertiäre Amine und/oder quartäre Ammoniumsalze und/oder quartäre Phosphoniumsalze in Mengen von 0,01 bis 5 Mol-%, bezogen auf die Mol-Summe der eingesetzten Diphenolkomponenten, geeignet.

Bevorzugte Katalysatoren sind Triethylamin, Tetrabutylammoniumbromid und N-Ethylpiperidin.

Die Isolierung der gemäß der deutschen Patentanmeldung P 34 45 440.3 beziehungsweise P 35 25 337.1 hergestellten aromatischen Block-Polyether- Polycarbonate erfolgt in üblicher Weise durch Eindampfen der

isolierten und gereinigten organischen Phase aus dem Phasengrenzflächenverfahren, gegebenenfalls in einem Vakuumextruder.

Die Polyether-Polycarbonate beziehungsweise die Polycarbonat-Polyphenylenoxid-Blockkondensate der deutschen Patentanmeldung P 34 45 440.3 beziehungsweise P 35 25 337.1 haben in der Regel relative Lösungsviskositäten von 0,8 bis 2, insbesondere von 1,2 bis 1,5, gemessen an einer Lösung von 0,5 g Substanz in 100 ml $CH_2Cl_2$-Lösung. Sie können bei Temperaturen zwischen 250°C und 380°C durch Spritzgießen auf handelsüblichen Maschinen zu Formkörpern guter Qualität verarbeitet werden. Sie können auch durch Extrusion bei Temperaturen zwischen 250°C und 380°C auf üblichen Extrudern zu Halbzeug extrudiert werden.

Weitere Einzelheiten über diese Blockkondensate, deren Herstellung und deren technischer Verwendung sind in der deutschen Patentanmeldung P 34 45 440.3 beziehungsweise P 35 25 337.1 beschrieben.

Der Einbau von Polyphenylenetherblöcken in Polycarbonate nach dem Phasengrenzflächenverfahren ist außerdem in der DE-OS-3 211 636 beschrieben.

Im vorliegenden Zusammenhang sind bevorzugte Gewichtsmengen an (I) 10 bis 95 Gew.-%, und an (II) entsprechend 90 Gew.-% bis 5 Gew.-%.

Polycarbonat-Polyphenylenoxid-Blockkondensate im Sinne der vorliegenden Erfindung sind auch Polymere, die 2 Gew.-% bis 50 Gew.-%, vorzugsweise 5 Gew.-%, bis 30 Gew.-%, bezogen auf das Gesamtgewicht des Blockkondensats, monofunktionelle Struktureinheiten der Formel (IV.1) beziehungsweise (IV.2)

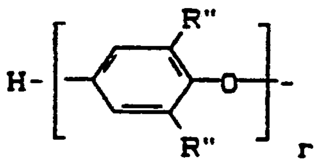 (IV.1) 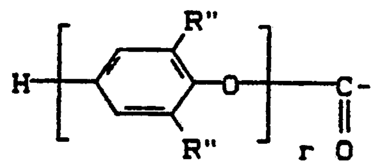 (IV.2)

enthalten, worin R" gleich oder verschieden ist und für Wasserstoff oder einen Alkylrest mit 1-4 C-Atomen steht und "r" eine ganze Zahl von 4 bis 100 vorzugsweise von 6 bis 30 ist, und 50 Gew.-%. bis 98 Gew.-%, vorzugsweise 70 Gew.-% bis 95 Gew.-%, bezogen auf das Gesamtgewicht des Blockkondensats, Struktureinheiten der Formel (II) enthalten.

Die Herstellung derartiger Polycarbonat-Polyphenylenoxid-Blockkondensate kann wiederum nach dem Phasengrenzflächenverfahren in bekannter Weise aus entsprechenden Polyphenylenoxiden (IVa)

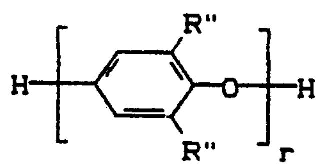 (IVa)

worin "R" und "r" die für Formel (IV.1) beziehungsweise (IV.2) genannte Bedeutung haben, Diphenolen

HO - Z - OH (IIa)

und Phosgen erfolgen (siehe beispielsweise DE-OS-3 211 636).

Die monofunktionellen Polyphenylenoxide (IVa) sind literaturbekannt oder nach literaturbekannten Verfahren herstellbar (siehe beispielsweise DE-OS-3 211 636, DE-OS-2 126 434 und US-PS-3 306 875). So lassen sich beispielsweise monofunktionelle Polyphenylenoxide der Formel (IVa) durch Oxydation von entsprechenden Phenolen (IVb)

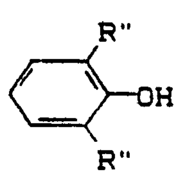

mit Sauerstoff (z. B. Luft) in Anwesenheit von Katalysatorkombinationen aus Kupfersalzen und tertiären Aminen herstellen.

Die Polycarbonat-Polyphenylenoxid-Blockkondensate mit Struktureinheiten der Formel (IV.1) beziehungsweise (IV.2) haben wiederum in der Regel relative Lösungsviskositäten von 0,8 bis 2, insbesondere von 1,2 bis 1,5, gemessen an einer Lösung von 0,5 g Substanz in 100 ml $CH_2Cl_2$-Lösung.

Die Verarbeitung dieser Blockkondensate mit Struktureinheiten (IV.1.2) kann auf handelsüblichen Maschinen durch Spritzgießen oder Extrusion erfolgen.

Die einzusetzenden monofunktionellen Polyphenylenoxide der Formel (IVa) besitzen mittlere Zahlenmittel-Molekulargewichte $\bar{M}n$ von 500 bis 10 000, vorzugsweise von 800 bis 3000; die einzusetzenden bifunktionellen Polyphenylenoxide der Formel (Ia) besitzen mittlere Zahlenmittel-Molekulargewichte $\bar{M}n$ von 600 bis 3000, vorzugsweise von 800 bis 1500, wobei in beiden Fällen $\bar{M}n$ nach der osmometrischen Methode in $CH_2Cl_2$ als Lösungsmittel gemessen werden kann.

Die Diphenole (IIa) sind entweder bekannt oder nach bekannten Verfahren herstellbar. Bevorzugte Diphenole (IIa) sind Bisphenol A = 2,2-Bis-(4-hydroxyphenyl)-propan, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenylsulfon sowie deren di- und tetrahalogenierten Derivate. Besonders bevorzugt ist Bisphenol A. Es können auch beliebige Mischungen der genannten Diphenole verwendet werden.

Bevorzugte Kettenabbrecher zur Herstellung der Blockkondensate mit Struktureinheiten der Formel (I) sind monofunktionelle aromatische Hydroxylverbindungen, wie 4-Hydroxydiphenyl, p-Nonylphenol, 4-(1.1.3.3-Tetramethylenethyl)-phenol, Chlorkohlensäureester, wie Chlorkohlensäureethyl- und -phenylester, und aliphatische und aromatische Carbonsäurechloride, wie Stearinsäurechlorid und Naphthalincarbonsäurechloride. Besonders bevorzugt sind die in der EP-A 36 080 beschriebenen Kettenabbrecher, z. B. p-Isooctylphenol und p-Isononylphenol.

Sie werden in Mengen von 0,1 bis 10 Mol-%, vorzugsweise 0,3 bis 7 Mol-%, bezogen auf eingesetzte Diphenole verwendet.

Bevorzugte Verzweiger zur Herstellung der Blockkondensate mit Struktureinheiten der Formel (I) sind 3- oder mehrfunktionelle Carbonsäurechloride, wie Trimesinsäuretrichlorid, Cyanursäuretrichlorid, 3,3',4,4'-Benzophenontetracarbonsäuretetrachlorid, 1,4,5,8-Naphthalintetracarbonsäuretetrachlorid oder Pyromellithsäuretetrachlorid, in Mengen von 0,01 bis 1,0 Mol-%, bezogen auf eingesetzte Diphenole, oder 3- oder mehrfunktionelle Phenole, wie Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenol)-ethan, Tri-(4-hydroxyphenyl)-phenylmethan, 2,2-Bis-[4,4-bis-(4-hydroxy-phenyl)-cyclohexyl]-propan, 2,4-Bis-(4-hydroxyphenyl-isopropyl)-phenol, Tetra-(4-hydroxy-phenyl)-methan, 2,6-Bis-(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis-[(4,4''-dihydroxytriphenyl)-methyl]-benzol, in Mengen von 0,01 bis 1,0 mol-%, bezogen auf eingesetzte Diphenole.

Der Einbau von Verzweigern in Polycarbonate, auch in segmentierte Polyether-Polycarbonate nach dem Phasengrenzflächenverfahren ist bekannt (siehe dazu DE-OS-1 570 533, US-RE 27 682, DE-OS-2 636 784 (Le A 17 025) und DE-OS-2 726 376 (Le A 18 015)).

**Zum Stand der Technik**

Mischungen aus Polycarbonaten und Polyestern sind bekannt (siehe beispielsweise DE-PS-1 187 793, DE-AS-1 694 124 und DE-OS-2 622 414).

Mischungen aus Polyestern und gepfropften Polymerisaten sind ebenfalls bekannt (siehe beispielsweise US-PS'en 3 919 353, 3 564 077, DE-OS-2 659 338 oder US-PS-4 096 202 bzw. DE-OS-2 726 256).

Mischungen aus Polycarbonaten und Polymerisaten sind ebenfalls bekannt (siehe beispielsweise Japanische Patentpublikation Nr. 18611/68 (Teijin, Priorität 30.6.1965), US-PS-3 663 471, US-PS-3 437 631, US-PS-4 299 928 oder DE-OS-3 114 494).

Mischungen aus Polycarbonaten, Polyestern und gepfropften Polymerisaten sind ebenfalls bekannt (siehe beispielsweise US-PS-3 864 428 bzw. DE-AS-2 343 609 oder US-PS-4 264 487 bzw. EP-OS 25 920 oder US-PS-4 257 937 bzw. EP-OS 20 605 bzw. WO 80/00972 oder DE-PS-1 569 448 bzw. GB-PS-1 007 724).

Obwohl Formmassen aus Polycarbonaten, Polyestern und kautschukelastischen Polymerisaten viele positive Eigenschaften besitzen, sind sie zumindest in einer Hinsicht noch verbesserungsbedürftig: Ihre Klebetemperatur ist zu niedrig. Unter Klebetemperatur versteht man die Temperatur von Spritzgießwerkzeugoberflächen oberhalb derer gespritzte Formteile an den Oberflächen haften, so die Entformung erschweren und größere Entformungskräfte erforderlich machen. Normalerweise werden Spritzgießwerkzeuge mit Wasser oder Öl gekühlt. In komplizierten Werkzeugen gibt es jedoch häufig Bereiche (z. B. kleine Kerne), die nicht ausreichend gekühlt werden können und deren Temperatur durch die einfließende Schmelze schnell ansteigt. Wenn so die Klebetemperatur erreicht wird, müssen die Cycluszeiten verlängert werden, um dem Werkzeug zwischen den Einspritzungen Zeit zum Abkühlen zu lassen.

Es wurde nun gefunden, daß die Klebetemperatur von Formmassen aus Polycarbonaten, Polyestern und kautschukelastischen Polymerisaten durch den Zusatz von Polycarbonat-Polyphenylenoxid-Blockkondensaten erheblich heraufgesetzt wird.

Aus der DE-OS 3 118 697 (Le A 21 047) sind thermoplastische Formmassen auf Basis von Polycarbonat, Polyalkylenterephthalat und gegebenenfalls einem oder mehreren Polymerisaten bekannt, deren Verzugsverhalten durch die Anwesenheit geringer Mengen an o,o,o',o'-Tetramethylenbisphenol-Polycarbonat außerordentlich positiv beeinflußt wird. Über das Klebeverhalten derartiger Formmassen werden in dieser DE-OS jedoch keine näheren Angaben gemacht, sondern lediglich der Hinweis gegeben, (Seite 26), daß Entformungsmittel zugesetzt werden können. Aus der EP-PS-0 133 236 (Le A 22 330-EP) sind Formmassen auf

Basis von Polycarbonat, Polyalkylenterephthalat und gegebenenfalls einer kautschukelastischen Polymerisats bekannt, deren Wärmeformbeständigkeit und Verzugsverhalten durch den Zusatz eines aromatischen Thermoplasten auf Polyetherimidbasis verbessert wird. Über das Klebeverhalten derartiger Formmassen werden in dieser EP-OS ebenfalls keine näheren Angaben gemacht, sondern wiederum lediglich der Hinweis gegeben (Seite 24), daß Entformungsmittel zugesetzt werden können.

Die Herstellung der erfindungsgemäßen Formmassen kann in den üblichen Mischaggregaten, wie Walzen, Knetern, Ein- und Mehrwellenextrudern erfolgen. Die Mischungstemperaturen liegen zwischen 200°C und 340°C, vorzugsweise zwischen 220°C und 300°C.

Wenn auch in den meisten Fällen sämtliche Harzkomponenten zweckmäßigerweise in einem einzigen Schritt gemischt werden, kann es manchmal auch empfehlenswert sein, zuerst eine oder gar zwei Komponenten wegzulassen und erst zu einem späteren Zeitpunkt zuzumischen.

In diesem Zusammenhang wurde noch gefunden, daß diejenigen der erfindungsgemäßen Formmassen, die 0 Gew.-% an Komponente (C) enthalten, ein etwas modifiziertes Eigenschaftsbild haben, verglichen mit denjenigen der erfindungsgemäßen Formmassen, die die Komponente (C) enthalten, erstere haben nämlich eine geringere Zähigkeit, aber eine höhere Wärmeformbeständigkeit und eine höhere Dauerwärmebeständigkeit.

Die erfindungsgemäßen Formmassen können zur Erhöhung der Benzinfestigkeit bis zu 5 Gew.-%, bezogen auf 100 Gew.-% Gesamtgewicht der Komponenten (A) + (B) + (C) + (D), Ethylenhomo- bzw. -copolymerisat enthalten. Ethylencopolymerisate in diesem Sinn sind Polyethylene, deren Reste neben Ethylenresten bis zu 30 Gew.-%, bezogen auf Ethylencopolymerisat, aus Resten anderer copolymerisierbarer Monomerer bestehen. Andere copolymerisierbare Monomere für die Herstellung dieser Ethylencopolymerisate sind z. B. (Meth-)Acrylsäure und die oben für die Herstellung von Pfropfgrundlage und Pfropfauflage für die Komponente (C) aufgezählten Monomeren.

Die erfindungsgemäßen Formmassen können gegebenenfalls die für Polycarbonate und/oder Polyester üblichen Additive wie Nukleiermittel, Stabilisatoren, Füll- und Verstärkungsstoffe, Flammschutzmittel und/oder Farbstoffe enthalten.

Die gefüllten bzw. verstärkten Formmassen können bis zu 60 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Titandioxid, Wollastonit.

Die mit Flammschutzmitteln ausgerüsteten Polyester-Formmassen enthalten Flammschutzmittel in einer Konzentration von im allgemeinen weniger als 30 Gew-%, bezogen auf die flammgeschützten Formmassen.

Es kommen die für Polycarbonate beziehungsweise Polyester beziehungsweise kautschukelastische Polymerisate bekannten Flammschutzmittel in Frage wie beispielsweise Polyhalogendiphenyle, Polyhalogendiphenylether, Polyhalogenphthalsäuren und ihre Derivate und Polyhalogenoligo- und -polycarbonate, wobei die entsprechenden Bromverbindungen besonders wirksam sind. Außerdem enthalten sie in der Regel einen Synergisten, z .B. Antimontrioxid.

Die erfindungsgemäßen Formmassen lassen sich bei Temperaturen von 220°C bis 340°C zu Formkörpern verarbeiten, und zwar sowohl nach dem Spritzgußverfahren als auch nach dem Extrusionsverfahren, und zwar zu Formkörpern beliebiger Art, beispielsweise zu Platten oder Folien.

Die aus den erfindungsgemäßen Formmassen erhältlichen Formkörper finden Verwendung beispielsweise in der elektrotechnischen und Kraftfahrzeugindustrie.

Die in den nachfolgenden Beispielen genannten Teile sind Gewichtsteile. Prozentangaben beziehen sich auf das Gewicht.

**Beispiele**

Verwendete Komponenten:

I. Polycarbonat aus Bisphenol-A, Phenol und Phosgen, relative Viskosität 1,285, gemessen in Dichlormethan bei 25°C in 0,5 %-iger Lösung.

II. Polybutylenterephthalat mit einer Intrinsic-Viskosität von 1,18 dl/g, gemessen in Phenol/o-Dichlorbenzol (Gew.-Verhältnis 1 : 1) bei 25°C im Ubbelohde-Viskosimeter.

III. Polyethylenterephthalat mit einer Intrinsic-Viskosität von 0,78 dl/g, gemessen wie II.

IV. Terpolymerisat aus Ethylen, Acrylsäure und tert.-Butylacrylat im Gew.-Verhältnis 89/4/7 mit einem Schmelzindex von 6 - 8 g/10 min. (gemessen bei 190°C und 2,16 kp Belastung nach DIN 53 735) und einer Dichte von 0,924 g/$cm^3$ (gemessen nach DIN 53 479).

V. Pfropfpolymerisat, 80 % Pfropfgrundlage aus vernetztem Polybutadien (Gelgehalt über 70 %, gemessen in Toluol) und 20 % Pfropfauflage aus Methylmethacrylat.

VI. Pfropfpolymerisat, 80 % Pfropfgrundlage aus vernetztem Polybutadien (Gelgehalt über 70 %, gemessen in Toluol) und 20 % Pfropfauflage aus 72 Teilen Styrol und 28 Teilen Acrylnitril.

VII. Pfropfpolymerisat mit Kern-Mantel -Struktur der folgenden Zusammensetzung, ausgedrückt in Gewichtsverhältnissen der es bildenden Monomeren:
n-Butylacrylat/Butandiol-1,3-diacrylat/Diallyl-maleat/Methylmethacrylat = 79,2/0,4/0,4/20,0.
VIII. Pfropfpolymerisat mit Kern-Mantel -Struktur, hergestellt nach dem folgenden Mehrstufenverfahren.

1. Herstellung der Pfropfgrundlage
1.1 Herstellung eines Polybutadienlatex
In einem Reaktor wird unter Rühren eine Emulsion folgender Zusammensetzung bei 65°C bis zum vollständigen Monomerumsatz innerhalb von ca. 22 Stunden polymerisiert.
100 Teile Butadien,
1,8 Teile-Na-Salz der disproportionierten Abietinsäure,
0,257 Teile Natriumhydroxid,
0,3 Teile n-Dodecylmercaptan,
1,029 Teile Na-Ethylendiamintetraacetat,
0,023 Teile Kaliumpersulfat und
176 Teile Wasser.
Es wird ein Latex erhalten, der Polybutadienteilchen eines mittleren Durchmessers ($d_{50}$) von 0,1 μm in einer Konzentration von ca. 36 % enthält.
1.2 Herstellung von Acrylatkautschuk, der Polydienkerne enthält.
In einem Reaktor wird unter Rühren bei 63°C folgende Mischung vorgelegt:
200 Teile Latex 1.1,
5000 Teile Wasser,
14 Teile Kaliumpersulfat,
0,9124 Teile Triallylcyanurat und
399,09 Teile n-Butylacrylat,
Innerhalb von 5 Stunden werden bei 63°C folgende Mischungen in den Reaktor getrennt eindosiert:

Mischung 1: 90 Teile $C_{14}$-$C_{18}$-Alkylsulfonat-Na und
11900 Teile Wasser.
Mischung 2: 23,09 Teile Triallylcyanurat und
10101 Teile n-Butylacrylat.

Anschließend läßt man 2 Stunden bei 65°C auspolymerisieren. Die gebildeten Polymerisate besitzen Gelgehalte von 85 - 95 % und mittlere Teilchendurchmesser ($d_{50}$) von 0,5 μm (Polymerisat-Gehalt im Latex: 38%).

2.1 Herstellung der Emulsionspfropfpolymerisate
2.1.1 Emulsionspfropfpolymerisat aus 90 % Acrylatkautschuk 1.2 und 10 % Styrol + Acrylnitril.
In einem Reaktor werden vorgelegt:
3296 Teile Latex 1.2,
1,5 Teile Kaliumpersulfat und
90 Teile Wasser.
Bei 65°C werden folgende Mischungen getrennt in den Reaktor eindosiert:

Mischung 1: 39 Teile Acrylnitril und 100 Teile Styrol,
Mischung 2: 150 Teile Wasser und 4 Teile $C_{14}$-$C_{18}$-Alkylsulfonat-Na.

Anschließend läßt man 4 Stunden bei 65°C auspolymerisieren (Polymerisat-Gehalt im Latex: 37,8 %).

2.2 Herstellung des Pfropfpolymerisates C aus dem Emulsionspropfpolymerisat.
In einem Reaktor werden bei 70°C vorgelegt:
18800 Teile Wasser und
240 Teile Bittersalz.
Unter Rühren läßt man nun innerhalb von 2 Stunden 11200 Teile Latex 2.1.1 in den Reaktor einlaufen.
Nach Beendigung des Zulaufens wird 1 Teil Kaliumpersulfat in den Reaktor gegeben; anschließend werden 148 Teile Acrylnitril und 381 Teile Styrol in 1 Stunde gleichmäßig unter Rühren eindosiert. Anschließend rührt man die Aufschlämmung 1 Stunde bei 90°C. Dann wird das Polymerisat C isoliert.

IX. Herstellung von monofunktionellen Polyphenylenoxid-Segmenten

a. $M_n$ ca. 1500

6 g CuCl
30 g 4-Dimethylamino-pyridin
1400 ml Chlorbenzol
wurden gemischt und 2 Stunden lang Luft (150 l/h) bei ca. 10 cm Schichthöhe durchgeblasen.

Nach Zugabe von
1220 g 2,6-Dimethylphenol und
6600 ml Ghlorbenzol
wurde weiter Luft (150 l/h) bei ca. 45 cm Schichthöhe eingeblasen. Die Temperatur des Reaktionsgemisches stieg von anfangs 21°C auf 29°C.

Nach 16,5 Stunden enthielt der Feststoff in der Lösung noch 1,28 Gew.-% OH-Gruppen. Die Oxidation wurde abgebrochen und das Reaktionsgemisch mit einem Gemisch aus 10 l $CH_3OH$ und 200 ml 40 %-iger wäßriger HCl intensiv verrührt. Das ausgefallene Polyphenylenoxid wurde abgesaugt, mit $CH_3OH$, dann mit Wasser gewaschen und im Vakuumtrockenschrank bei 60°C getrocknet. Die Ausbeute betrug 1014 g, ca. 82 % d.Th. Die osmometrische Molgewichtsbestimmung in $CH_2Cl_2$ ergab $M_n = 1513$.

b. $M_n$ ca. 4500

Ein Ansatz wie unter a beschrieben, wurde erst abgebrochen, als der Feststoff in der Lösung 0,39 Gew.-% OH enthielt. Die Ausbeute betrug 1052 g = ca. 85 % d.Th. $M_n$ lag bei 4567.

X. Herstellung von bifunktionellen Polyphenylenoxid-Segmenten

a. $M_n$ ca. 800

10 g CuCl
50 g 4-Dimethylamino-pyridin
1500 ml Chlorbenzol
wurden gemischt und 2 Stunden lang Luft (150 l/h) bei ca. 10 cm Schichthöhe durchgeleitet.

Nach Zugabe von
977 g 2,6-Dimethylphenol und
568 g 2,2-Bis-(3,5-dimethyl-4-hydroxyphenyl)-propan sowie 7000 ml Chlorbenzol
wurde in die Lösung weiter Luft (150 l/h) bei ca. 50 cm Schichthöhe eingeblasen. Die Temperatur des Reaktionsgemisches stieg von anfangs 20°C auf 31°C. Die Reaktion wurde abgebrochen, als ein OH-Gehalt des Feststoffes von 4,2 Gew.-% erreicht war, die Lösung mit wäßriger Ethylendiamintetraessigsäure-Trinatriumsalz-Lösung, mit verdünnter HCl, wäßriger $NaHCO_3$-Lösung und Wasser gewaschen.

Das beim Eindampfen der Lösung verbleibende bifunktionelle Polyphenylenoxid besaß ein $M_n$ (osmometrisch im $CH_2Cl_2$-Lösung bestimmt) von 796.

Eine gelchromatografische Analyse zeigte nur ca. 1,3 Gew.-% monofunktionelle Anteile.

b. $M_n$ ca. 1250

15 g CuCl,
35 g 4-Dimethylamino-pyridin,
1,5 l Chlorbenzol
wurden gemischt und 1 Stunde lang Luft (100 l/h) bei ca. 10 cm Schichthöhe durchgeleitet.

Nach Zugabe von
285 g 2,2-Bis-(3,5-dimethyl-4-hydroxyphenyl)-propan,
977 g 2,6-Dimethylphenol und
7,7 l Chlorbenzol
wurden 100 l/h Luft eingeleitet.

Die Temperatur stieg dabei von anfänglich 20°C auf 28°C an. Die Reaktion wurde abgebrochen, als ein OH-Gehalt des Feststoffes von ca. 2,8 Gew.-% erreicht war.

Die Aufarbeitung des Ansatzes erfolgte wie unter a beschrieben.

$M_n$ des Produktes lag bei ca. 1260. Ca. 2 Gew.-% monofunktionelle Anteile waren im Produkt enthalten.

XI. Herstellung von Polycarbonat-polyphenylenoxid-blockcokondensaten

a) aus IXa:

1598 g (7 Mol) Bisphenol A und
800 g (20 Mol) NaOH wurden unter $N_2$ in 45 l Wasser gelöst.

Nach Zugabe von 30 l $CH_2Cl_2$ mit 525 g (0,35 Mol) darin gelöstem monofunktionellem Polyphenylenoxid (IX a) wurde innerhalb 1 Stunde unter heftigem Rühren 1,3 kg Phosgen eingeleitet, wobei der pH-Wert der wäßrigen Phase bei 13 - 14, die Temperatur bei 20 - 22°C gehalten wurde.

Nach Zugabe von 40 ml N-Ethylpiperidin wurde 1 Stunde bei pH 13 - 14 nachgerührt.

Die Phasen wurden dann getrennt, die organische gewaschen, das Lösungsmittel daraus zur Hälfte abdestilliert, das Blockcokondensat mit Isopropanol ausgefällt. und im Vakuum bei 100°C getrocknet. Ausbeute: 2136 g, $\eta_{rel}$ 1,31 (gemessen an einer Lösung von 0,5 g Produkt in 100 ml $CH_2Cl_2$-Lösung).

b) aus IX b:

XIa wurde wiederholt, an Stelle von IXa jedoch 1600 g (0,355 Mol) IXb eingesetzt und in größerer Verdünnung gearbeitet (60 l $CH_2Cl_2$ an Stelle von 30 l gegenüber XIa).

Außerdem wurden 1,6 kg $COCl_2$ verwendet (an Stelle von 1,3 kg). Die Ausbeute betrug 3283 g. $\eta_{rel}$ lag bei 1,346.

c) aus X a:

1598 g (7 Mol) Bisphenol A und
800 g NaOH wurden unter $N_2$ in
45 l Wasser gelöst.

Nach Zugabe von 50 l $CH_2Cl_2$ mit 1600 g (2 Mol) darin gelöstem Xa und 54,1 g (4 Mol-%) tert.-Butylphenol wurden innerhalb 1 Stunde unter heftigem Rühren 1,3 kg Phosgen eingeleitet. Die weitere Verarbeitung erfolgte wie unter XI a beschrieben. Die Ausbeute betrug 3286 g, $\eta_{rel}$ 1,306.

d) aus X b:

XI c wurde wiederholt, an Stelle X a jedoch 2500 g X b eingesetzt.

Die Ausbeute lag bei 4176 g, $\eta_{rel}$ bei 1,336.

Die Zusammensetzungen der compoundierten Mischungen und die dazugehörigen Klebetemperaturen sind in Tabelle 1 zusammengefaßt.

**Tabelle 1**

Komponenten, Gew.-Teile

| Beispiel | | I | II | III | IV | V | VI | VII | VIII | IXb | Xa | XIa | XIb | XIc | XId | Klebetemperatur °C |
|---|---|---|---|---|---|---|---|---|---|---|---|---|---|---|---|---|
| Vergleichsbeispiele | 1 | 50 | 38 | | | | 12 | | | | | | | | | 85 |
| | 2 | 50 | 38 | | | 12 | | | | | | | | | | 82 |
| | 3 | 50 | 38 | | 12 | | | | | | | | | | | 88 |
| | 4 | 50 | | 38 | | | | 12 | | | | | | | | 83 |
| | 5 | 50 | | 38 | | | | | 12 | | | | | | | 84 |
| | 6 | 40 | 38 | | | | | 12 | | 10 | | | | | | 93 |
| | 7 | 40 | | 38 | | | 12 | | | | 10 | | | | | 95 |
| | 8 | 50 | 40 | | | | | | | 10 | | | | | | 97 |
| Beispielle gemäß der Erfindung | 1 | 40 | 38 | | | | 12 | | | | | 10 | | | | 131 |
| | 2 | 40 | 38 | | | 12 | | | | | | | 10 | | | 129 |
| | 3 | 40 | 38 | | 12 | | | | | | | | | 10 | | 133 |
| | 4 | 40 | | 38 | | | | 12 | | | | | | | 10 | 138 |
| | 5 | 40 | | 38 | | | | | 12 | | | | | | | 132 |
| | 6 | 30 | 38 | | | | | 12 | | | | 10 | 20 | | | 145 |
| | 7 | 30 | | 38 | | | 12 | | | | | | | 20 | | 141 |
| | 8 | 40 | 40 | | | | | | | | | | 20 | | | 144 |

Die Entformungsversuche wurden mit der in Abbildung 1 im Prinzip dargestellten Vorrichtung durchgeführt. Beim Öffnen des Spritzgießwerkzeuges nach dem Spritzvorgang bleibt das Formteil (Konus) auf dem Kern K und wird von diesem mit dem Auswerfer A abgeschoben. Oberhalb der Klebetemperatur werden die Formteile beim Abschieben vom Kern K zerstört.

Einzelheiten der Entformungsprüfung finden sich in "Kunststoffe" 66 (1976) S. 210.

In der Abbildung 1 bedeuten:

1 hydraulischer Auswerfer, 2 mechanischer Druckschreiber, 3 Kraftmeßdose (DMS), 4 Flüssigkeit-Oszillograph, 5 Spritzgießwerkzeug, 6 Thermostate, 7 Temperaturschreiber, 8 Spritzaggregat, 9 Einstichpyrometer, 10 Drehzahlmesser.

**Patentansprüche**

1. Thermoplastische Formassen enthaltend

(A) 98 bis 1 Gew.-% thermoplastische, aromatische Polycarbonate mit Gewichtsmittelmolekulargewichten $M_w$ zwischen 10 000 und 200 000 ($M_w$ ermittelt durch Lichtstreuung)

(B) 1 bis 98 Gew.-% thermoplastische Polyalkylenterephthalate und gegebenenfalls

(C) 0 bis 30 Gew.-% einer kautschukelastischen Polymerisats mit einer Glasübergangstemperatur von unter -20° C,

dadurch gekennzeichnet, daß sie

(D) 1 bis 30 Gew.-% eines Polycarbonat-Polyphenylenoxid-Blockcokondensats enthalten, wobei die Summe der Gewichtsprozente der Komponenten (A) + (B) + (C) + (D) jeweils 100 Gew.-% beträgt.

2. Formmassen nach Anspruch 1, dadurch gekennzeichnet, daß sie an

(A) 78 bis 20 Gew.-%, an
(B) 20 bis 78 Gew.-%, an
(C) 1 bis 20 Gew.-% und an
(D) 1 bis 20 Gew.-%, enthalten.

3. Formmassen nach Anspruch 1, dadurch gekennzeichnet, daß sie an

(A) 64 bis 30 Gew.-%, an
(B) 30 bis 64 Gew.-%, an
(C) 3 bis 12 Gew.-%, und
(D) 3 bis 15 Gew.-% enthalten.

4. Formmassen gemäß Anspruch 1, bestehend aus den Komponenten (A) + (B) + (D) und gegebenenfalls (C), die noch Ethylenhomo- beziehungsweise -copolymerisate, Nukleiermittel, Stabilisatoren, Füllstoffe, Verstärkungsstoffe, Flammschutzmittel und/oder Farbstoffe enthalten.

**Claims**

1. Thermoplastic moulding materials containing

(A) 98 to 1 % by weight of thermoplastic aromatic polycarbonates with weight-average molecular weights $M_w$ of between 10,000 and 200,000 ($M_w$ being determined by light scattering),
(B) 1 to 98 % by weight of thermoplastic polyalkylene terephthalates and, optionally,
(C) 0 to 30 % by weight of an elastomeric polymer having a glass transition temperature of below -20° C,

characterized in that they contain

(D) 1 to 30 % by weight of a polycarbonate-polyphenylene oxide block cocondensate, the sum of the percentages by weight of components (A) + (B) + (C) + (D) being in each case 100 % by weight.

2. Moulding materials according to claim 1, characterized in that they contain

78 to 20 % by weight of (A),
20 to 78 % by weight of (B),
1 to 20 % by weight of (C) and
1 to 20 % by weight of (D).

3. Moulding materials according to claim 1, characterized in that they contain

64 to 30 % by weight of (A),
30 to 64 % by weight of (B),
3 to 12 % by weight of (C) and
3 to 15 % by weight of (D).

4. Moulding materials according to claim 1, consisting of components (A) + (B) + (D) and optionally (C), which additionally contain ethylene homopolymers or ethylene copolymers, nucleating agents, stabilizers, fitlers, reinforcing agents, flameproofing agents and/or colourants.

**Revendications**

1. Compositions thermoplastiques à mouler, contenant

(A) 98 à 1 % en poids de polycarbonates aromatiques thermoplastigues ayant des moyennes en poids $M_p$ du poids moléculaire de 10 000 à 200 000 ($M_p$ déterminé par diffusion de la lumière)
(B) 1 à 98 % en poids de polyalkylène-téréphtalates thermoplastiques et, le cas écheant,
(C) 0 à 30 % en poids d'un polymérisat ayant l'élasticité du caoutchouc, avec une température de transition vitreuse inférieure à -20° C,

caractérisées en ce qu'elles contiennent

(D) 1 à 30 % en poids d'un co-condensat à blocs polycarbonate-polyphénylène-oxyde, la somme des pourcentages en poids des composants (A) + (B) + (C) + (D) s'élevant toujours à 100 % en poids.

2. Compositions à mouler suivant la revendication 1, caractérisées en ce ou'elles contiennent

78 à 20 % en poids de (A)
20 à 78 % en poids de (B)
1 à 20 % en poids de (C) et
1 à 20 % en poids de (D).

3. Compositions à mouler suivant la revendication 1, caractérisées en ce qu'elles contiennent

64 à 30 % en poids de (A)
30 à 64 % en poids de (B)
3 à 12 % en poids de (C) et
3 à 15 % en poids de (D).

4. Compositions à mouler suivant la revendicaion 1, constituées des composants (A) + (B) + (D) et, le cas échéant, (C), qui contiennent en outre des homopolymérisats et des copolymérisats d'éthylène, des agents de nucléation, des agents stabilisants, des charges, des substances de renforcement, des agents retardateurs de flamme et/ou des colorants.

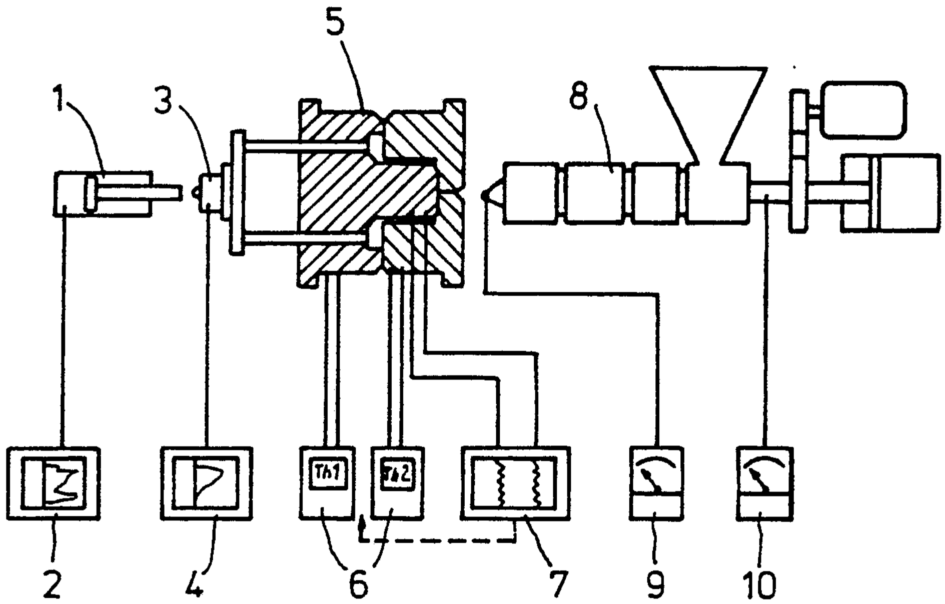
5
1
3
8
Th1
Th2
2
4
6
7
9
10